Europäisches Patentamt

European Patent Office

Office européen des brevets

(11) Publication number: **0 162 689 B1**

# EUROPEAN PATENT SPECIFICATION

(45) Date of publication of patent specification: **25.09.91**   (51) Int. Cl.⁵: **G11B 20/18**, G11B 20/10, G11B 5/016, //H04N5/781

(21) Application number: **85303532.7**

(22) Date of filing: **20.05.85**

(54) **Magnetic disc reproducing apparatus.**

(30) Priority: **21.05.84 JP 102056/84**

(43) Date of publication of application:
**27.11.85 Bulletin 85/48**

(45) Publication of the grant of the patent:
**25.09.91 Bulletin 91/39**

(84) Designated Contracting States:
**AT CH DE FR GB IT LI NL SE**

(56) References cited:
**EP-A- 0 105 213**
**EP-A- 0 106 661**
**US-A- 4 424 543**

(73) Proprietor: **SONY CORPORATION**
**7-35 Kitashinagawa 6-Chome Shinagawa-ku**
**Tokyo 141(JP)**

(72) Inventor: **Kutaragi, Ken c/o Sony Corporation**
**Patents Division 7-35 Kitashinagawa**
**6-chome**
**Shinagawa-ku Tokyo(JP)**

(74) Representative: **Cotter, Ivan John et al**
**D. YOUNG & CO. 10 Staple Inn**
**London WC1V 7RD(GB)**

**Description**

This invention relates to magnetic disc reproducing apparatus.

Conventional 8 inch (203.20 mm) or 5.25 inch (133.35 mm) floppy discs are standardised in format and almost all disc drives are operated under the standardised format. As a result, it is very difficult to employ vanguard technology for realising higher density recording and/or reproducing in conventional systems. Further, since the speed of rotation of a magnetic disc incorporated in conventional floppy disc systems is usually 300 r.p.m. or 600 r.p.m., It is impossible to record and/or reproduce an analog video signal in real time. If the video signal is digitised, it can be recorded and/or reproduced, but one floppy disc is capable of, at best, recording only one item of still video information for its receptacle jacket size of 8 inches (203.20 mm) or 5.25 inches (133.35 mm). Furthermore, in addition to an analog-to-digital (A/D) converter and a digital-to-analog (D/A) converter, a frame memory is required, so that an entire system becomes very expensive and of large size. Accordingly, it is not practical to use a conventional floppy disc system to record and/or reproduce a video signal.

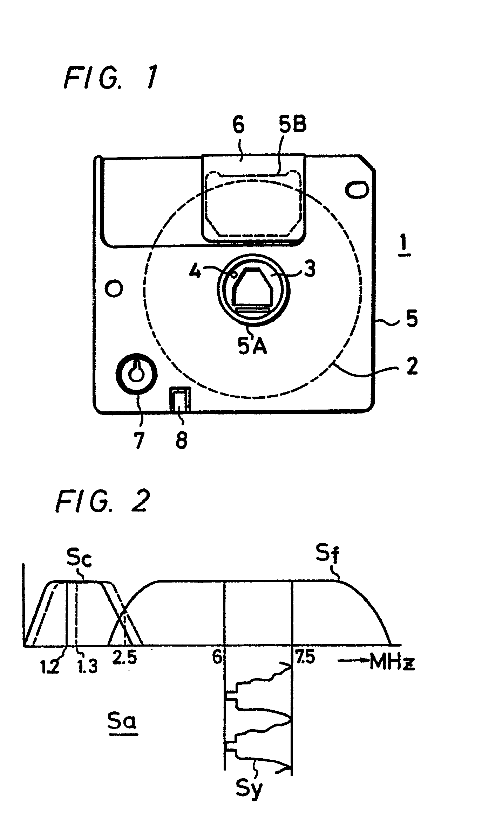

An electronic still camera conference of Japan therefore proposed a 2 inch (50.80 mm) floppy disc or flexible disc cartridge as a recording medium for an electronic still camera. Figure 1 of the accompanying drawings is a diagram of the proposed 2 inch (50.80 mm) floppy disc and illustrates the general construction thereof.

In Figure 1, reference numeral 1 generally designates the proposed floppy disc (or flexible disc cartridge) and reference numeral 2 designates a magnetic disc incorporated in the floppy disc 1. The magnetic disc 2 is 47 mm in diameter and 40 micrometres in thickness and is provided at a central portion thereof with a central core 3 with which a spindle of a drive mechanism (not shown) is engaged. The central core 3 is provided with a magnetic piece or member 4 which indicates the angular position of the magnetic disc 2 as it rotates.

A receptacle jacket 5, which is 60 x 54 x 3.6 mm in size, accommodates therein the magnetic disc 2 in such a manner that the disc is freely rotatable. The jacket 5 includes a central opening 5A that exposes the central core 3 and the magnetic piece or member 4 to the outside. The jacket 5 is also provided with another opening 5B through which a magnetic head (not shown) comes into contact with the magnetic disc 2 upon recording and/or reproducing. When the floppy disc 1 Is not in use, the opening 5B is closed by a slidable dust-proof shutter 6. The floppy disc 1 includes a counter dial 7 for indicating the number of pictures taken by an electronic camera and a nail-like member 8 for preventing accidental misrecording. The member 8 is removed when recording is to be inhibited.

Upon recording, 50 magnetic tracks can be formed concentrically on one surface of the magnetic disc 2. The outermost track is considered as the first track and the innermost track is considered as the 50th track. Each track has a width of 60 micrometres and there is a guard band having a width of 40 micrometres between adjacent tracks.

On taking a picture, the magnetic disc 2 is rotated at 3600 r.p.m. (field frequency) and a colour video signal of one field is recorded on each track of the magnetic disc 2. The colour video signal to be recorded is as shown in Figure 2. Thus, referring to Figure 2, a luminance signal $S_y$ is frequency-modulated onto a carrier to form a frequency modulated signal $S_f$, the sync tip level of this signal being 6 MHz and the white peak level being 7.5 MHz. With regard to a chrominance signal, there is formed a line sequential colour signal $S_c$ which comprises a signal having a centre frequency of 1.2 MHz which is frequency modulated by a red colour difference signal and a signal having a centre frequency of 1.3 MHz which is frequency modulated by a blue colour difference signal. A signal $S_a$ obtained by adding the frequency modulated colour signal $S_c$ and the frequency modulated luminance signal $S_y$ is recorded on the magnetic disc 2.

The floppy disc 1 described above with reference to Figure 1 has a size, function or characteristics enabling it to serve as a recording medium for 50 still colour video signals.

Since, however, the floppy disc 1 has been standardised so as to record and/or reproduce analog colour video signals as set forth above, it cannot easily handle digital data. If, for example, digital data is converted to a quasi-video signal and then recorded on the floppy disc 1 just like in an audio pulse code modulation (PCM) processor for a video tape recorder (VTR), the floppy disc 1 is small in memory capacity as regards the original digital data. Also, there are many problems, such as data compatibility with an existing 8 inch (203.20 mm) or 5.25 inch (133.35 mm) floppy disc, a difference of broadcasting system, an enlarged circuit scale, etc.

Alternatively, consideration might be given to an arrangement in which, when a colour video signal is recorded on or reproduced from the floppy disc 1, it is carried out in accordance with the above-mentioned format, while, when digital data is recorded on or reproduced therefrom, it is carried out in accordance with the format of a conventional floppy disc. Although, in this case, the floppy disc 1 is a very high recording density disc from the point of view of video signal, It is a low recording density disc from the point of view of the digital data, and thus is not useful.

When both the video signal and the digital data are recorded on or reproduced from one floppy disc 1, that is if the disc content comprises a mixture of one or more video signals and digital data, the two signals are largely different In occupied bands and characteristics so that it becomes difficult to record and reproduce the video signal and the digital data together under optimum conditions in view of electromagnetic transducer characteristics, head-disc contact conditions and so on. Further, when both video signals and digital data are to be recorded and/or reproduced, the drive unit for rotating the floppy disc 1 must be rotated at 300 r.p.m. (or 600 r.p.m.) in the case of digital data and 3600 r.p.m. in the case of a video signal. The resultant need to change selectively the speed of revolution of the floppy disc 1 gives rise to problems, such as the floppy disc 1 cannot be accessed for several seconds until the servo is stabilised, the manufacturing cost is increased, and so on.

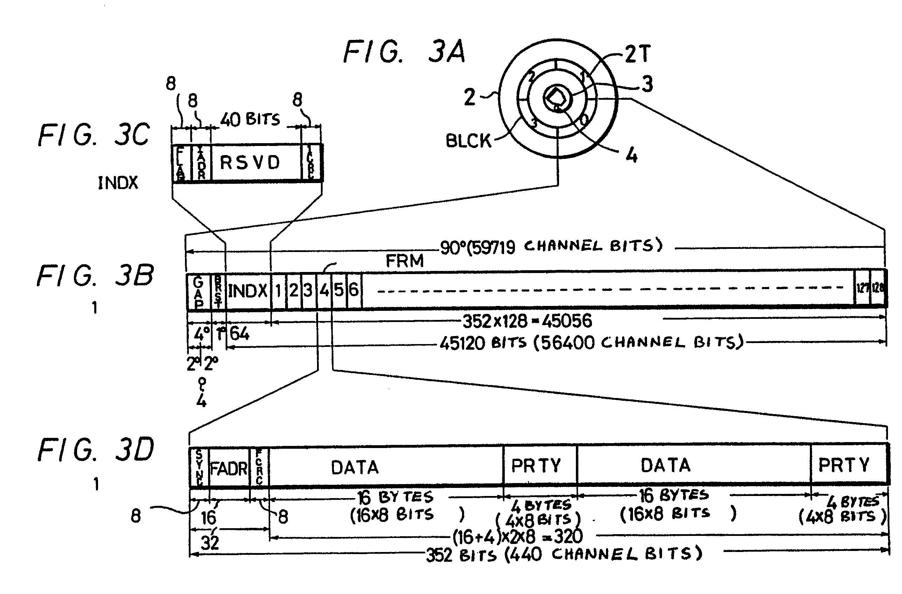

Consideration might therefore be given to the floppy disc 1 using the format that will now be described with reference to Figures 3A to 3D so as to become able also to record and reproduce the digital data.

In Figure 3A, a reference 2T designates one of the tracks on the magnetic disc 2. The track 2T is equally divided into four intervals of 90° in its circumferential direction with the magnetic piece or member 4 serving as a reference. Each of the four intervals is referred to as a block BLCK. The block BLCK of the interval containing the magnetic piece or member 4 is represented as block 0 and the succeeding three blocks are represented as block 1, block 2 and block 3, sequentially.

Figure 3B shows one of the blocks (for example block 0) in more detail. As shown in Figure 3B, each block BLCK includes an interval of 4° from its beginning which is represented as a gap interval GAP and which affords a margin upon reading and writing. In the case of block 0, the centre of the gap interval GAP corresponds to the position of the magnetic piece or member 4.

An interval of 1° following the gap interval GAP is represented as a burst interval BRST. In the burst interval BRST there is recorded and/or reproduced a burst signal BRST which serves as:

(i) a preamble signal;

(ii) a signal indicative of a recording density of a recorded signal; and

(iii) a flag signal indicating that a recorded signal is a digital signal.

The burst interval BRST is followed by an index interval INDX for an index signal. As shown in Figure 3C, the index signal INDX comprises a flag signal FLAG of 8 bits, an address signal IADR of 8 bits, a reserved signal RSVD of 40 bits and a check signal ICRC of 8 bits. The flag signal FLAG indicates whether the track 2T to which the block BLCK belongs is bad or not or whether the track 2T is erased or not and so on. The address signal IADR indicates the number (1 to 50) of the track 2T and the number (0 to 3) of the block BLCK, and the check signal ICRC is a cyclic redundancy check code (CRCC) for the flag signal FLAG, the address signal IADR and the reserved signal RSVD.

An interval which follows the index interval INDX is equally divided into 128 intervals and a signal referred to as a frame FRM is recorded on or reproduced from each of these intervals. As shown in Figure 3D, one frame FRM includes from its beginning, sequentially, a frame synchronising signal SYNC of 8 bits, a frame address signal FADR of 16 bits, a check signal FCRC of 8 bits, 16 bytes (one byte = 8 bits) of digital data DATA, 4 bytes of redundant or parity data PRTY, 16 further bytes of digital data DATA and 4 further bytes of redundant or parity data PRTY. The check signal FCRC is a cyclic redundancy check code (CRCC) for the frame address signal FADR. The data DATA is original data which should be accessed by a host computer or apparatus and this data DATA is interleaved within a period of digital data of one block BLCK. The redundant data PRTY is parity data $C_1$ and $C_2$ which is generated by a Reed Solomon coding method having a minimum distance of five for digital data of one block (32 bytes x 128 frames).

According, the digital data capacities of one block BLCK, one track 2T and one disc 1 are as follows:
one block: 4096 bytes ( = 32 bytes x 128 frames);
one track: 16 K bytes ( = 4096 bytes x 4 blocks); and
one disc: 800 K bytes ( = 16 K bytes x 50 tracks)

The numbers of bits in one frame FRM and one block BLCK are as follows:
one frame: 352 bits (8 + 16 + 8 bits + (16 + 4 bytes) x 8 bits x 2 frames); and
one block (only the index interval and frame interval): 45120 bits ( = 352 bits x 123 frames).
In practice, however, when the digital signal is recorded on or reproduced from the disc 1, a digital sum value (DSV) is required to be small and a ratio Tmin (minimum length between transitions)/Tmax (maximum length between transitions) is required to be small, while a window margin (Tw) is required to be large Thus, all of the above-described digital signals are subjected to 8/10 (eight-to-ten)-conversion with Tmax = 4T and then recorded on the disc 1. Upon reproducing, they are subjected to a reverse conversion and then subjected to the succeeding inherent signal processing.

Accordingly, in the case of the above-described data density, the number of the bits on the disc 1 is in practice multiplied by 10/8 and is presented as:

one frame: 440 channel bits; and

one block (only the index interval and frame interval): 56400 channel bits.

Thus, the number of bits in the whole interval of one block corresponds to 59719 channel bits (approximately equal to 56400 channel bits x 90°/85°). Since, in practice, the length of each interval is assigned by the number of the channel bits as mentioned above, the total angle of the frame intervals is a little less then 85°.

Consequently, the bit rate at which the disc 1 is accessed by the digital signal (the signal after the 8/10-conversion) is presented as:

14.32 M bits/sec (approximately equal to 59719 bits x 4 blocks x field frequency) and one bit corresponds to 69.8 nanoseconds (approximately equal to 1/14.32 M bits).

As described above, according to the format as shown in Figures 3A to 3D, 800 K bytes of digital data can be written on or read out from the flopy disc 1 of 2 inch (50.80 mm) size. This capacity is more than twice the capacity (320 K bytes) of the conventional 5.25 inch (133.35 mm) floppy disc. Thus, the 2 inch (50.80 mm) floppy disc 1 has a large capacity in spite of its small size.

Since the disc 2 is rotated at the same speed of revolution as in the case of colour video signal recording, when both a colour video signal or signals and digital data are recorded on or reproduced from the disc 2, that is if the disc content comprises a mixture of video signals and digital data, both the signals to be recorded on or reproduced from the disc 2 become similar in frequency spectrum and so on, so that they can be recorded on or reproduced from the disc 2 under optimum conditions such as the electromagnetic conversion characteristic, the contact condition with a magnetic head and the like. Further, even when mixed signals are recorded on or reproduced from the disc 2, since the speed of revolution of the disc 2 is not changed over, it is not necessary to afford extra time to change over the servo circuit and, therefore, the two signals can selectively be used immediately. In addition, the fact that there is a single speed of revolution of the disc 2 and a mechanism such as an electromagnetic transducer system or the like is single in characteristic and function is advantageous from the cost standpoint.

Even though the floppy disc 1 of Figure 1 was intended for use with analog signals, as mentioned above, if the format of Figure 3 is applied thereto the floppy disc 1 can achieve a new effect and become a floppy disc of the next generation.

In the case of the conventional floppy disc, data transfer between the disc and peripheral instruments is carried out directly at a speed determined by the speed of revolution of the disc without using a buffer memory therebetween. Further, data is allocated on the floppy disc such that data is written in or read out from the floppy disc at a sector unit with its address data being made consecutive. In other words, the time sequence of the data recorded on the floppy disc is continuous relative to the original time sequence.

However, in the above-mentioned floppy disc of the next generation, higher transfer speed is required as the digital magnetic recording becomes higher in density. Furthermore, since the data has added thereto a redundant bit for error correction and is re-arranged by interleaving, the time sequence of the resultant data becomes non-successive with respect to the original time sequence on the floppy disc. As a result, the floppy disc cannot be connected with the peripheral instruments under this state.

Therefore, consideration might be given to interposing a buffer memory between the floppy disc and the peripheral instruments. If, however, the data having the data allocation corresponding to the recorded pattern on the flcppy disc is written in or read out from the buffer memory as it is, the logical data address as seen from the peripheral instruments is not continuous. Accordingly, when the data is transferred in a direct memory access (DMA) manner so as to transfer the data at high speed, since the data must be transferred with its address being consecutive, such address is not matched with the buffer memory, and the data therefore cannot be transferred at high speed.

To overcome the above-described shortcoming, consideration might be given to an arrangement in which upon recording, after the addition of the parity data $C_1$ and $C_2$, while upon reproducing, after the error correction process, the data within the buffer memory is re-arranged such that the data is stored in the buffer memory with its address successive as regards the original time sequence. This, however, requires extra memory capacity and a conversion time for re-arranging the data, which is not desirable.

European Patent Application Publication No. EP-A-0 105 213 discloses an electric still picture photography system including a magnetic disc reproducing apparatus having the features of the pre-characterising part of claim 1.

US Patent No. US-A-4 424 543 discloses a magnetic disc reproducing apparatus in which digital signals on a disc are reproduced with the aid of identifying preamble signals included in respective sectors of tracks on the discs.

According to the invention there is provided a magnetic disc reproducing apparatus for reproducing an analog video information signal from one of a plurality of tracks of a magnetic disc, the apparatus comprising:

transducer means selectively positionable in transducing relation with said tracks for reproducing the information signal from one of said tracks while the disc is rotated at a predetermined speed; and

synchronising signal separating means for separating from a reproduced analog video information signal a synchronising signal characteristic of the analog video information signal;

characterised in that, in order that the apparatus can reproduce either said analog video information signals, which are analog colour video information signals, or digital information signals recorded in respective ones of said tracks, which digital information signals comprise burst signals at predetermined circumferential portions along the associated tracks, the apparatus comprises:

synchronisation signal detecting means connected to the synchronising signal separating means and operative to produce an output signal indicating whether an information signal being reproduced contains a said synchronising signal;

burst signal detecting means operative to monitor the rotational position of the disc and to produce an output signal indicative of whether an information signal being reproduced contains a burst signal at the predetermined circumferential position along the associated track; and

gating means connected to receive said output signals of the synchronisation signal detecting means and the burst signal detecting means and operative to derive from said output signals a flag output indicating whether the information signal being reproduced is an analog video information signal or a digital information signal.

A preferred magnetic disc reproducing apparatus embodying the invention and described hereinbelow can properly discriminate an analog video information signals and digital information or data signals from each other, if the analog video signals and the digital data are recorded on a disc in a mixed state, that is if the information recorded on the disc comprises both an analog video signal or signals and digital data.

The invention will now be further described, by way of illustrative and non-limiting example, with reference to the accompanying drawings, in which like references designate like elements and parts throughout, and in which:

Figure 1 is a diagram illustrating the overall construction of a previously proposed floppy disc;

Figure 2 is a diagram showing an example of a colour signal recorded on the floppy disc of Figure 1;

Figures 3A to 3D are diagrams illustrating a format for recording data on the floppy disc of Figure 1; and

Figure 4 is a block diagram of a magnetic disc reproducing apparatus which is a preferred embodiment of the present invention.

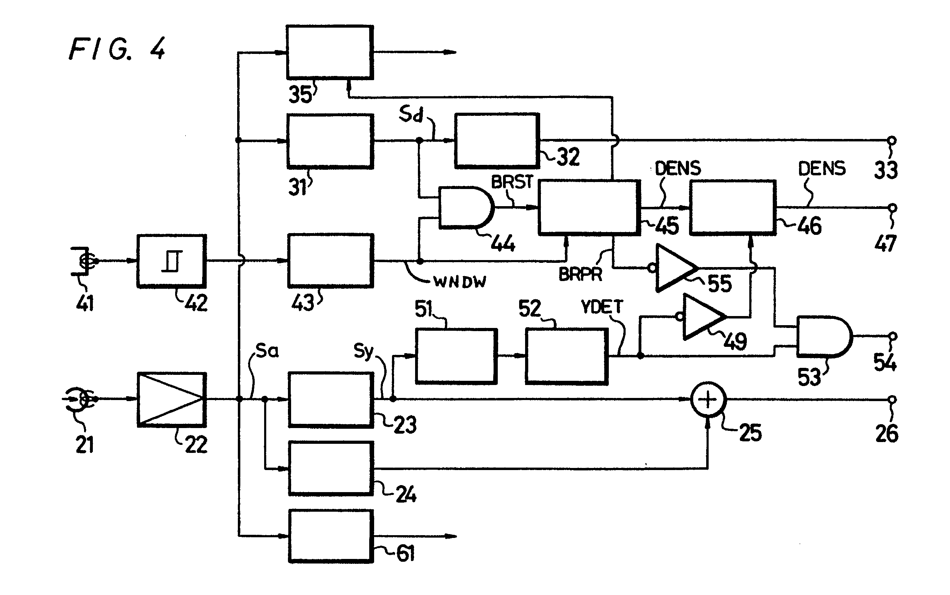

A magnetic disc reproducing apparatus which is a preferred embodiment of this invention will now be described with reference to Figure 4, which is a block diagram of the apparatus.

The apparatus includes a playback head 21. Upon playback, the playback head 21 contacts the magnetic disc 2 through the opening 5B of the floppy disc 1 (Figure 1) so that the playback head 21 reproduces a signal recorded on the track 2T. The signal reproduced by the playback head 21 is supplied through a playback amplifier 22 to a luminance signal processing circuit 23, a chrominance signal processing circuit 24 and a 10-8 (ten-to-eight) converting circuit 31.

When the signal reproduced by the playback head 21 is an analog signal (colour video signal) Sa, the luminance signal processing circuit 23 separates the frequency modulated (FM) signal Sf from the colour video signal Sa and demodulates the luminance signal Sy from the separated signal Sf. The demodulated luminance signal Sy is supplied to an adding circuit 25. At the same time, in the chrominance signal processing circuit 24, the line-seqential signal is separated from the colour video signal Sa, changed into simultaneous signals, frequency-demodulated and then orthogonally two-phase balanced-modulated to thereby become a carrier chrominance signal of the NTSC system. The carrier chrominance signal also is supplied to the adding circuit 25. Accordingly, in the adding circuit 25, the carrier chrominance signal is added to the luminance signal Sy and a colour video signal of the NTSC system is therefore developed at an output terminal 26.

When, on the other hand, the signal reproduced by the playback head 21 is a digital signal, the digital signal is converted from serial data to parallel data at the 10-8 converting circuit 31 and converted to an 8-bit digital signal Sd. The signal Sd is supplied to a decoder 32 in which the data DATA is de-interleaved and error-corrected by using the redundant or parity code PRTY to thereby be decoded to the original parallel data of 8 bits. This digital data is delivered to a terminal 33.

At this time, the reproduced signal from the amplifier 22 is supplied to a phase locked loop (PLL) circuit 35 which then produces a clock pulse signal. The clock pulse signal from the PLL circuit 35 is supplied to the converting circuit 31 and other circuits.

In order to discriminate the signals reproduced by the playback head 21, the magnetic disc reproducing apparatus is further arranged as follows.

The apparatus includes a magnetic head 41. The magnetic head 41 is disposed near a rotary surface of the magnetic piece or member 4 of the floppy disc 1 (Figure 1) and produces a pulse indicative of the rotary phase of the floppy disc 1 at every rotation thereof. This pulse is supplied through a waveform shaping amplifier 42 to a timing generator 43 which then produces a window pulse WNDW indicative of the burst interval BRST at every block BLCK of the track 2T. The pulse WNDW and the signal Sd from the converting circuit 31 are supplied to respective inputs of an AND-circuit 44.

A burst detecting circuit 45, which comprises a frequency-to-voltage converting circuit, a level detecting circuit and so on, is connected to an output of the AND-circuit 44 to detect the presence or absence of the burst signal BRST and the recording density indicated by the burst signal BRST. The burst detecting circuit 45 produces a signal BRPR which becomes "1" in the presence of the burst signal BRST and a parallel detecting signal DENS which changes its value in accordance with the recording density indicated by the burst signal BRST. At this time, the pulse WNDW from the timing generator 43 is supplied to the burst detecting circuit 45 as a latch signal therefor.

When the luminance signal Sy is produced by the processing circuit 23, the signal Sy is supplied to a synchronising signal separating circuit 51 and a horizontal synchronising pulse is derived therefrom. The presence or absence of the synchronising pulse is detected by a synchronising pulse detecting circuit 52 and an output signal YDET thereof becomes "1" in the presence of a horizontal synchronising pulse. Accordingly, when the luminance signal Sy is produced from the processing circuit 23, YDET = "1" is established and thus the signal YDET serves as a signal for indicating the presence or absence of the luminance signal Sy.

When a dropout occurs in the signal reproduced by the playback head 21 (or no reproduced output exists), a dropout detecting circuit 61 connected to the playback amplifier 22 produces a signal which indicates the presence of dropout. This signal is used as a control signal for a dropout compensating circuit not shown) of the processing circuit 23, a pointer for indicating missing digital data to the decoder 32, a tracking servo signal for the playback head 21, and so on.

Accordingly, when the signal reproduced by the playback head 21 is a digital signal, the burst signal BRST is produced from the digital signal Sd in the AND-circuit 44 and the burst signal BRST is supplied to the detecting circuit 45 so that the signal DENS indicative of the recording density is produced by the detecting circuit 45. The signal DENS is delivered to a gate circuit 46.

At this time, since the luminance signal Sy is not produced by the processing circuit 23, the signal YDET thereof has a value of "0". This signal YDET is supplied through an inverter 49 to the gate circuit 46 as a control signal for the gate circuit. Accordingly, the signal DENS (indicative of the recording density) from the detecting circuit 45 is delivered through the gate circuit 46 to a terminal 47.

Further, at this time, since the burst signal BRST exists, the signal BRPR has a value of "1". This signal BRPR is supplied through an inverter 55 to an AND-circuit 53. The luminance signal Sy is not produced so that the signal YDET has a value of "0". This signal YDET also is supplied to the AND-circuit 53 and, therefore, an output signal at a terminal 54 (connected to an output of the AND-circuit 53) becomes "0".

In addition, at this time, a signal similar to the signal DENS is supplied from the detecting circuit 45 to the PLL circuit 35 and the frequency-dividing ratio of the PLL circuit 35 or the like is controlled in accordance with the recording density.

On the other hand, when the signal reproduced by the playback head 21 is the analog signal (colour video signal) Sa, the signal YDET indicative of the presence or absence of the luminance signal Sy becomes "1" and the signal BRPR which is indicative of the presence or absence of the burst signal BRST becomes "0" so that the output signal of the AND-circuit 53 becomes "1".

At this time, since YDET = "1" is established, the output signal of the inverter 49 becomes "0" so that no output signal is produced at the terminal 47.

Accordingly, the output signal at the terminal 54 becomes a flag indicative of whether the present reproduced signal is either a colour video signal or digital data. That is, when the output flag at the terminal 54 is "0", the flag indicates that the present reproduced signal is digital data. At this time, the digital data is supplied to the terminal 33 and the signal DENS indicative of the recording density is developed at the terminal 47. When, on the other hand, the output flag at the terminal 54 is "1", the flag indicates that the present reproduced signal is a colour video signal. At this time, the colour video signal is supplied to the terminal 26.

Further, the presence of absence of a reproduced signal is indicated by the output signal from the detecting circuit 61.

With the apparatus of Figure 4, even if a colour video signal or signals and digital data are recorded on the floppy disc 1 and are mixed with each other, they can properly be discriminated from each other. Consequently, since analog video signals and digital data can be processed by a single medium and drive unit, not only do the jacket of the disc for an electronic still camera and the jacket of a floppy disc become the same, but also a wide variety of data and information can be organically connected with one another and used at low cost and with ease.

## Claims

1. A magnetic disc reproducing apparatus for reproducing an analog video information signal from one of a plurality of tracks (2T) of a magnetic disc (2), the apparatus comprising:

    transducer means (21) selectively positionable in transducing relation with said tracks (2T) for reproducing the information signal from one of said tracks (2T) while the disc (2) is rotated at a predetermined speed; and

    synchronising signal separating means (51) for separating from a reproduced analog video information signal a synchronising signal characteristic of the analog video information signal;

    characterised in that, in order that the apparatus can reproduce either said analog video information signals, which are analog colour video information signals, or digital information signals recorded in respective ones of said tracks (2T), which digital information signals comprise burst signals at predetermined circumferential portions along the associated tracks (2T), the apparatus comprises:

    synchronisation signal detecting means (52) connected to the synchronising signal separating means (51) and operative to produce an output signal (YDET) indicating whether an information signal being reproduced contains a said synchronising signal;

    burst signal detecting means (41, 43, 44, 45) operative to monitor the rotational position of the disc (2) and to produce an output signal (BRPR) indicative of whether an information signal being reproduced contains a burst signal at the predetermined circumferential position along the associated track (2T); and

    gating means (53, 55) connected to receive said output signals (YDET, BRPR) of the synchronisation signal detecting means (52) and the burst signal detecting means (41, 43, 44, 45) and operative to derive from said output signals (YDET, BRPR) a flag output indicating whether the information signal being reproduced is an analog video information signal or a digital information signal.

2. Apparatus according to claim 1, wherein said gating means (53, 55) comprises an AND circuit means (53) having first and second inputs, the first input being connected to receive the output signal (YDET) of the synchronisation signal detecting means (52), and an inverting means (55) connected to receive the output signal (BRPR) of the burst signal detecting means (41, 43, 44, 43) and operative to supply the inverse of the output signal (BRPR) to the second input of the AND circuit means (53).

3. Apparatus according to claim 1 or 2, for use with a disc (2) on which the burst signals contain information indicative of the recording density of the digital information signals, wherein the burst signal detecting means (41, 43, 44, 45) is operative to produce a density output signal (DENS) corresponding to the recording density of a digital information signal being reproduced.

4. Apparatus according to claim 3, as appendant to claim 2, comprising gate means (46) connected to receive said density output signal (DENS) and further inverting means (49) having an input connected to receive said output signal (YDET) of the synchronisation signal detecting means (52) and having an output connected to control said gate means (46) such that said density signal (DENS) is outputted by the gate means (46) only if said output signal (YDET) of the synchronisation signal detecting means (52) is such as to indicate that the information signal being reproduced does not contain a said synchronising signal.

## Revendications

1. Un appareil de reproduction de disque magnétique destiné à la reproduction d'un signal d'information vidéo analogique à partir d'une piste parmi un ensemble de pistes (2T) d'un disque magnétique (2), cet appareil comprenant :

    des moyens transducteurs (21) pouvant être positionnés sélectivement dans une relation de détection par rapport aux pistes (2T), pour reproduire le signal d'information à partir de l'une des pistes (2T), pendant que le disque (2) tourne à une vitesse prédéterminée; et

    des moyens de séparation de signal de synchronisation (51) qui sont destinés à séparer d'un signal d'information vidéo analogique reproduit un signal de synchronisation qui est caractéristique du signal d'information vidéo analogique;

    caractérisé en ce que, pour que l'appareil puisse reproduire soit des signaux d'information vidéo analogique, qui sont des signaux d'information vidéo en couleurs de type analogique, soit des signaux d'information numérique qui sont enregistrés dans des pistes respectives (2T), ces signaux d'information numérique comprenant des signaux de salves situés dans des parties de circonférence prédéterminées le long des pistes associées (2T), l'appareil comprend :

des moyens de détection de signal de synchronisation (52) qui sont connectés aux moyens de séparation de signal de synchronisation (51) et qui produisent un signal de sortie (YDET) indiquant si un signal d'information qui est reproduit contient un signal de synchronisation;

des moyens de détection de signal de salve (41, 43, 44, 45) qui contrôlent la position en rotation du disque (2) et qui produisent un signal de sortie (BRPR) qui indique si un signal d'information qui est reproduit contient un signal de salve à la position de circonférence prédéterminé le long de la piste associée (2T); et

des moyens de transmission sélective (53, 55) qui sont connectés de façon à recevoir les signaux de sortie (YDET, BRPR) des moyens de détection de signal de synchronisation (52) et des moyens de détection de signal de salve (41, 43, 44, 45), et qui élaborent à partir de ces signaux de sortie (YDET, BRPR), un signal de sortie d'indicateur qui indique si le signal d'information qui est reproduit est un signal d'information vidéo analogique ou un signal d'information numérique.

2. Appareil selon la revendication 1, dans lequel les moyens de transmission sélective (53, 55) comprennent un circuit ET (53) ayant des première et seconde entrées, la première entrée étant connectée de façon à recevoir le signal de sortie (YDET) des moyens de détection de signal de synchronisation (52), et des moyens inverseurs (55) qui sont connectés de façon à recevoir le signal de sortie (BRPR) des moyens de détection de signal de salve (41, 43, 44, 45), et qui appliquent l'inverse du signal de sortie (BRPR) à la seconde entrée du circuit ET (53).

3. Appareil selon la revendication 1 ou 2, prévu pour l'utilisation avec un disque (2) dans lequel les signaux de salve contiennent une information qui indique la densité d'enregistrement des signaux d'information numérique, dans lequel les moyens de détection de signal de salve (41, 43, 44, 45) produisent un signal de sortie de densité (DENS) qui correspond à la densité d'enregistrement d'un signal d'information numérique qui est reproduit.

4. Appareil selon la revendication 3, rattachée à la revendication 2, comprenant une structure de porte (46) qui est connectée de façon à recevoir le signal de sortie de densité (DENS), et des moyens inverseurs supplémentaires (49) ayant une entrée connectée de façon à recevoir le signal de sortie (YDET) des moyens de détection de signal de synchronisation (52), et ayant une sortie connectée de façon à commander la structure de porte (46), de façon que la structure de porte (46) n'émette le signal de densité (DENS) que si le signal de sortie (YDET) des moyens de détection de signal de synchronisation (52) indique que le signal d'information qui est reproduit ne contient pas un signal de synchronisation.

## Patentansprüche

1. Magnetplatten-Wiedergabevorrichtung zum Wiedergeben eines analogen Video-Informationssignals aus einer Vielzahl von Spuren (2T) einer Magnetplatte (2), welche Vorrichtung

ein Wandlermittel (21), das selektiv wirksam in bezug auf die Spuren (2T) zum Wiedergeben des Informationssignals aus einer der Spuren (2T) positionierbar ist, während die Platte (2) bei einer vorbestimmten Geschwindigkeit gedreht wird, und

ein Synchronisierungssignal-Trennmittel (51) umfaßt zum Trennen eines Synchronisierungssignals, das für das analoge Video-Informationssignal kennzeichnend ist, von einem wiedergegebenen analogen Video-Informationssignal, dadurch **gekennzeichnet,** daß damit die Vorrichtung entweder die analogen Video-Informationssignale, die analoge Farbvideo-Informationssignale sind, oder digitale Informationssignale wiedergeben kann, die in betreffenden der Spuren (2T) aufgezeichnet sind, wobei die digitalen Informationssignale Burst-Signale in vorbestimmten Abschnitten des Umfangs längs den zugeordneten Spuren (2T) enthalten, die Vorrichtung umfaßt:

ein Synchronisierungsignal-Erfassungsmittel (52, das mit dem Synchronisierungssignal-Trennmittel (51) verbunden ist und wirksam ist, um ein Ausgangssignal (YDET) zu erzeugen, das angibt, ob ein Informationssignal, das wiedergeben wird, ein Synchronisierungssignal enthält,

ein Burst-Signal-Erfassungsmittel (41, 43, 44, 45), das wirksam ist, um die Drehposition der Platte (2) zu überwachen und um ein Ausgangssignal (BRPR) zu erzeugen, das angibt, ob ein Informationssignal, welches wiedergegeben wird, ein Burst-Signal bei der vorbestimmten Umfangsposition längs der zugeordneten Spur (2T) enthält, und

eine Torschalteinrichtung (53, 55), die angeordnet ist, um die Ausgangssignale (YDET, BRPR) des Synchronisierungssignal-Erfassungsmittels (52) und des Burst-Signal-Erfassungsmittels (41, 43, 44, 45) aufzunehmen, und die wirksam ist, um von den Ausgangssignalen (YDET, BRPR) ein Kennzeichnungs-Ausgangssignal abzuleiten, das angibt, ob das Informationssignal, welches wiedergegeben wird, ein analoges Video-Informationssignal oder ein digitales Informationssignal ist.

2. Vorrichtung nach Anspruch 1, bei der die Torschalteinrichtung (53, 55) umfaßt: eine UND-Schaltung (53), die einen ersten und einen zweiten Eingang hat, wobei der erste Eingang so beschaltet ist, daß er das Ausgangssignal (YDET) des Synchronisierungssignal-Erfassungsmittels (52) aufnimmt, und eine invertierende Einrichtung (55), die so angeordnet ist, daß sie das Ausgangssignal (BRPR) des Burst-Signal-Erfassungsmittels (41, 43, 44, 43) aufnimmt, und die wirksam ist, um den Inverswert des Ausgangssignals (BRPR) dem zweiten Eingang der UND-Schaltung (53) zuzuführen.

3. Vorrichtung nach Anspruch 1 oder 2, zur Benutzung mit einer Platte (2), auf welcher die Burst-Signale Information enthalten, die kennzeichnend für die Aufzeichnungsdichte der digitalen Informationssignale ist, wobei das Burst-Signal-Erfassungsmittel (41, 43, 44, 45) wirksam ist, um ein Dichteausgangssignal (DENS) zu erzeugen, das der Aufzeichnungsdichte eines digitalen Informationssignals, welches wiedergegeben wird, entspricht.

4. Vorrichtung nach Anspruch 3, wenn dieser auf Anspruch 2 rückbezogen ist, welche Vorrichtung umfaßt: eine Torschalteinrichtung (46), die angeordnet ist, um das Dichteausgangssignal (DENS) aufzunehmen, und ferner eine invertierende Einrichtung, die einen Eingang hat, der so beschaltet ist, daß er das Ausgangssignal (YDET) des Synchronisierungssignal-Erfassungsmittels (52) aufnimmt, und die einen Ausgang hat, der beschaltet ist, um die Torschalteinrichtung (46) derart zu steuern, daß das Dichteausgangssignal (DENS) nur dann durch die Torschalteinrichtung (46) ausgegeben wird, wenn das Ausgangssignal (YDET) des Synchronisierungssignal-Erfassungsmittels (52) angibt, daß das Informationssignal, welches wiedergegeben wird, kein Synchronisie-

rungssignal enthält.

## FIG. 1

## FIG. 2

## FIG. 3A

## FIG. 3C

INDX

8    8    40 BITS    8

| F A | T A D R | R S V D | C R C |

## FIG. 3B

1

90° (59719 CHANNEL BITS)

FRM

| GAP | RST | INDX | 1 | 2 | 3 | 4 | 5 | 6 | - - - - - - - - - - - - - - | 127 | 128 |

4°   1 64

2° 2°

0
4

352×128 = 45056

45120 BITS (56400 CHANNEL BITS)

2T

2

BLCK

3

4

## FIG. 3D

1

8

| SYNC | FADR | E CRC | DATA | PRTY | DATA | PRTY |

16   8

32

16 BYTES
(16×8 BITS)

4 BYTES
(4×8 BITS)

16 BYTES
(16×8 BITS)

4 BYTES
(4×8 BITS)

(16+4)×2×8 = 320

352 BITS (440 CHANNEL BITS)

EP 0 162 689 B1

FIG. 4